# EUROPÄISCHE PATENTSCHRIFT

(11) **EP 4 026 157 B1**
(45) Veröffentlichungstag und Bekanntmachung des Hinweises auf die Patenterteilung: **18.12.2024**
(21) Anmeldenummer: 20761617.8
(22) Anmeldetag: 01.09.2020
(51) Int. Cl.: H01H 47/32, H01H 47/22, H01H 50/08, H01H 50/04

(54) **RELAISMODUL**
RELAY MODULE
MODULE DE RELAIS

(30) Priorität: 03.09.2019 LU 101387
(43) Veröffentlichungstag der Anmeldung: 13.07.2022
(73) Patentinhaber: Phoenix Contact GmbH & Co. KG, 32825 Blomberg (DE)
(72) Erfinder: HUDETZ, Hans-Peter, 31789 Hameln (DE)
(74) Vertreter: LifeTech IP Spies & Behrndt Patentanwälte PartG mbB
(86) Internationale Anmeldenummer: PCT/EP2020/074336
(87) Internationale Veröffentlichungsnummer: WO 2021/043761

(56) Entgegenhaltungen:
- EP-A1- 3 185 272
- WO-A1-2015/017882
- DE-A1- 102007 006 830
- US-A- 5 811 963

## Beschreibung

Die Erfindung betrifft ein Relaismodul. Insbesondere betrifft die Erfindung, ohne darauf beschränkt zu sein, ein wechselstromgespeistes Relaismodul mit einstellbarer und hysteresearmer Schaltschwelle.

Das Dokument DE 10 2007 006830 A1 beschreibt eine Aneinanderreihung von E/A-Modulen und ein aufgestecktes Steuer- und/oder Datenübertragungsmodul.

Das Dokument EP 3 185 272 A1 beschreibt ein Einbaugerät für ein bistabiles Relais mit einer Steuerung über eine H-Brücke.

Das Dokument WO 2015/017882 A1 beschreibt eine elektrische Relais-Treiberanordnung zum Auf- und Entladen einer elektrischen Spule eines elektromechanischen Relais, wobei die Antriebsanordnung in festgelegten Intervallen am Nulldurchgang einer Wechselspannungsversorgung eine Kapazitätsanordnung mit einem Widerstand aufladen soll.

Das Dokument US 5 811 963 A beschreibt eine Steuerschaltung, beispielsweise einen Bewegungsmelder, die permanent mit Spannung versorgt ist, auch wenn die Spannungsquelle abgeschaltet ist. Dazu gibt es einen Energiespeicher.

Bereits auf dem Markt befindliche Relaismodule umfassen eingangsseitig einen Tiefpass, beispielsweise ein RC-Glied. Da solche Relaismodule direkt von der Wechselspannung (AC) des Ansteuersignals gespeist sind, wird der Tiefpass speziell gegen Störsignale aus dem AC-Netz auf der Ansteuerseite eingesetzt. Jedoch haben solche Relaismodule aufgrund der physikalischen Eigenschaften der Relaisspule, beispielsweise aufgrund des ferromagnetischen Zustands des Kerns der Relaisspule, einen relativ weiten Ansprech- und Rückfallspannungsbereich. Hierbei wirkt sich auch der Vorteil einer geringeren Stromaufnahme der Relaismodule im Vergleich zu herkömmlichen Schützen negativ aus. Beispielsweise kann der Ansprech- und Rückfallspannungsbereich bei 230 V AC Nenn-Ansteuerspannung je nach Relaisspule zwischen 170 V Ansprechspannung und 40 V AC Rückfallspannung liegen. Hierin können sich Spannungs- und Stromangaben für Wechselstrom auf den jeweiligen Effektivwert oder das quadratische Mittel beziehen.

Beim Schalten von anderen Motoren und Schützen werden häufig hohe Störspannungen und Störströme erzeugt. Diese können, auch bei getrennten AC-Netzen, aufgrund von langen Leitungslängen in die Ansteuerleitungen des Relaismoduls einkoppeln.

Störspannungen und Störströme in der Ansteuerleitung können zu einem unbeabsichtigten Schalten bzw. verzögerten Abfallen der Relaisspule führen. Ferner kann eine Status-Anzeige leuchten, insbesondere eine bei geringem Strom ansprechende lichtemittierende Diode (LED), obwohl die Relaisspule noch keinen Schaltvorgang bewirkt hat. Dieses Anzeige- und Schaltverhalten ist irreführend deshalb nicht erwünscht.

Um diese nicht gewollten Eigenschaften herkömmlicher Relaismodule einzuschränken wird häufig ein Filter, beispielsweise ein RC-Glied, parallel zum Eingang geschaltet. Dieser Filter soll Störungen kompensieren und für ein sicheres Ein- bzw. Abschalten des Relaismoduls sorgen. In einigen Anlagen, speziell in der Kraftwerkstechnik, ist diese Art von Filter nicht ausreichend, so dass es hier immer noch zu Fehlverhalten von Relaismodulen kommt.

Die Erfindung hat die Aufgabe hier Abhilfe zu schaffen. Insbesondere kann der Erfindung die Aufgabe zugrunde liegen, ein Relaismodul bereitzustellen, mit einer einstellbaren und/oder hysteresearmen Schaltschwelle anzugeben.

Die Aufgabe wird erfindungsgemäß mit den Merkmalen des unabhängigen Anspruchs gelöst. Zweckmäßige Ausgestaltungen und vorteilhafte Weiterbildungen der Erfindung sind in den Unteransprüchen angegeben.

Weitere Merkmale und Vorteile von Ausführungsbeispielen der Erfindung sind im Folgenden unter teilweiser Bezugnahme auf die Zeichnungen beschrieben.

Gemäß der Erfindung umfasst ein Relaismodul einen Steuereingang, der zur kombinierten Ansteuerung und Leistungsversorgung des Relaismoduls mit Wechselspannung beaufschlagt oder beaufschlagbar ist. Das Relaismodul umfasst ferner einen Festspannungsregler, der dazu ausgebildet ist, nach Gleichrichtung der Wechselspannung oder eines Anteils der Wechselspannung eine Festspannung zu erzeugen. Das Relaismodul umfasst ferner einen Komparator, der dazu ausgebildet ist, von der Festspannung betrieben zu werden und eine von der Festspannung abgeleitete Referenzspannung mit einem gleichgerichteten und geglätteten Anteil der Wechselspannung zu vergleichen. Das Relaismodul umfasst ferner eine Schaltstufe, die dazu ausgebildet ist, abhängig vom Vergleich des Komparators eine Relaiseinheit zu betreiben. Das Relaismodul umfasst ferner eine Relaiseinheit, die eingangsseitig mit der Schaltstufe und ausgangsseitig mit Schaltanschlüssen des Relaismoduls verbunden ist.

Ausführungsbespiele des Relaismoduls können aufgrund des Vergleichs im Komparator eindeutig steuern, ob die Schaltstufe die Relaiseinheit betreibt oder nicht. Da die Referenzspannung für den Vergleich aus der Festspannung abgeleitet ist, kann eine Schaltschwelle am Steuereingang zustandsunabhängig und/oder hysteresearm sein. Da der Komparator von der Festspannung betrieben wird, können dieselben oder weitere Ausführungsbeispiele des Relaismoduls ohne eine separate oder permanente Spannungsversorgung betrieben werden.

Die Wechselspannung kann eine Netzspannung sein. Die Wechselspannung kann 110 V AC bis 230 V AC sein. Alternativ oder in Kombination kann die Festspannung 5 V DC bis 12 V DC betragen.

Die abgeleitete Referenzspannung kann ein fester Anteil der Festspannung sein. Das Relaismodul, insbesondere der Komparator, kann einen Spannungsteiler umfassen, der dazu ausgebildet ist, die Referenzspannung als festen Anteil aus der Festspannung abzuleiten.

Das Relaismodul kann ferner einen dem Festspannungsregler vorgeschalteten Gleichrichter umfassen. Der Gleichrichter kann einen Brückengleichrichter zur Gleichrichtung der Wechselspannung oder eines Anteils der Wechselspannung umfassen.

Die Schaltstufe kann einen vom Gleichrichter gespeisten Spulenstromkreis der Relaiseinheit schalten. Die Schaltstufe kann dazu ausgebildet sein, abhängig vom Vergleich den Minuspol des Gleichrichters wahlweise mit der Relaiseinheit leitend zu verbinden und von der Relaiseinheit zu trennen. Im Spulenstromkreis kann eine Zustandsanzeige, vorzugsweise in Reihe zur Relaiseinheit, geschaltet sein.

Zwischen dem Steuereingang und dem (dem Festspannungsregler vorgeschalteten) Gleichrichter kann ein Blindwiderstand, vorzugsweise ein kapazitiver Blindwiderstand, angeordnet sein, der den Anteil der Wechselspannung zur Gleichrichtung erzeugt. Am Blindwiderstand kann ein Großteil, vorzugsweise mehr als die Hälfte oder mehr als 75%, der Wechselspannung abfallen.

Der Komparator kann zur Ausführung des Vergleichs einen Operationsverstärker umfassen. Der gleichgerichtete und geglättete Anteil der Wechselspannung und die Referenzspannung können an Eingängen des Operationsverstärkers anliegen. Eine die Schaltstufe steuernde Steuerspannung kann vom Operationsverstärker erzeugt werden.

Der Komparator kann ferner dazu ausgebildet sein, den gleichgerichteten und geglätteten Anteil der Wechselspannung für den Vergleich mit der Referenzspannung unabhängig vom dem Festspannungsregler vorgeschalteten Gleichrichter zu erzeugen. Beispielsweise kann der Komparator einen Einweggleichrichter mit einem Glättungskondensator umfassen. Am Einweggleichrichter kann die Wechselspannung oder ein Anteil der Wechselspannung als Eingangsspannung anliegen. Der Einweggleichrichter kann dazu ausgebildet sein, eine geglättete Gleichspannung zu erzeugen für den gleichgerichteten und geglätteten Anteil der Wechselspannung im Komparator.

Der Komparator kann ferner einen Spannungsteiler umfassen. Am Spannungsteiler des Komparators kann die geglättete Gleichspannung des Einweggleichrichters anliegen. Der Spannungsteiler des Komparators kann dazu ausgebildet sein, einen Anteil der geglätteten Gleichspannung zu erzeugen als den gleichgerichteten und geglätteten Anteil der Wechselspannung im Komparator.

Der Spannungsteiler kann, beispielsweise mittels eines Potentiometers, steuerbar sein. Dadurch kann der gleichgerichtete und geglättete Anteil der Wechselspannung für den Vergleich steuerbar sein. Insbesondere kann dadurch die Schaltschwelle am Steuereingang steuerbar sein. Beispielsweise kann die Schaltschwelle manuell am Relaismodul einstellbar sein.

Die Eingangsspannung des Komparators kann zwischen dem Steuereingang und dem (dem Festspannungsregler vorgeschalteten) Gleichrichter abgegriffen sein. Der Komparator kann die Eingangsspannung vor dem Blindwiderstand (beispielsweise über Mega-Ohm-Widerstände im Komparator) oder nach dem Blindwiderstand (beispielsweise mit entsprechend kleineren Vorwiderständen im Komparator) abgreifen.

Das Relaismodul kann in einem geschlossenen Gehäuse angeordnet sein. Das Gehäuse kann aufgrund einer geringen Verlustleistung des Relaismoduls geschlossen sein, beispielsweise da Schaltungselemente des Relaismoduls nur beim Betrieb der Relaiseinheit bestromt sind und/oder der Blindwinderstand das Spannungsniveau der Wechselspannung nahezu verlustfrei absenkt.

Am Gehäuse können von außen zugängliche Klemmen der Schaltanschlüsse angeordnet sein. Das Gehäuse kann zur Befestigung auf einer Tragschiene, insbesondere einer Hutschiene, ausgebildet sein. Der Steuereingang kann ebenfalls über von außen zugängliche Klemmen am Gehäuse verdrahtet sein. Alternativ oder ergänzend können der Steuereingang und/oder die Schaltanschlüsse Steckkontakte am Gehäuse aufweisen, die dazu angeordnet sind, sich parallel der Tragschiene erstreckende Stromschienen zu kontaktieren.

Das Gehäuse kann einen von außen zugänglichen Steckplatz zur austauschbaren mechanischen und elektrischen Verbindung der Relaiseinheit aufweisen. Dadurch kann das Relaismodul an unterschiedliche Schaltleistungen, Schaltspannungen, Schaltströme und/oder Relaisfunktionen durch Einsetzen bzw. Austausch der Relaiseinheit angepasst werden. Beispielsweise kann eine Relaiseinheit für ein Stromstoßrelais und/oder für mehr als zwei Zustände eingesetzt werden.

Nachfolgend wird die Erfindung unter Bezugnahme auf die Zeichnungen anhand bevorzugter Ausführungsbeispiel näher erläutert.

Es zeigen:
- Fig. 1: eine schematische Darstellung eines Blockschaltbilds eines Relaismoduls gemäß einem ersten Ausführungsbeispiel der Erfindung;
- Fig. 2: ein beispielhaftes Diagramm eines Schaltverhaltens eines Relaismoduls gemäß einem zweiten Ausführungsbeispiel der Erfindung;
- Fig. 3: ein schematisches Schaltbild eines Relaismoduls gemäß einem dritten Ausführungsbeispiel der Erfindung; und
- Fig. 4: eine beispielhafte perspektivische Darstellung eines Relaismoduls gemäß einem vierten Ausführungsbeispiel der Erfindung.

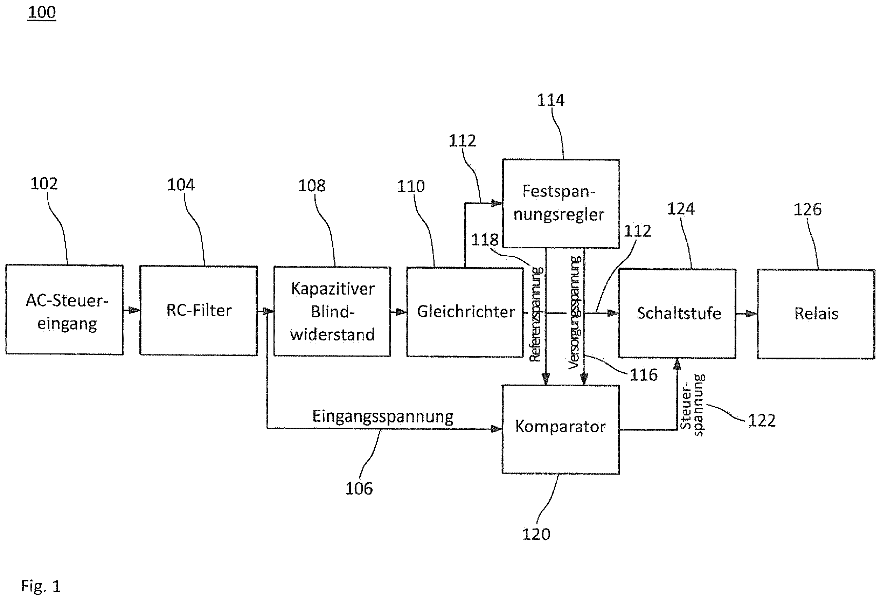

Fig. 1 zeigt eine schematische Darstellung eines Blockschaltbilds eines ersten Ausführungsbeispiels eines allgemein mit Bezugszeichen 100 bezeichneten Relaismoduls.

Das Relaismodul 100 umfasst einen Steuereingang 102, der zur kombinierten Ansteuerung und Leistungsversorgung des Relaismoduls 100 mit Wechselspannung (AC) beaufschlagt oder beaufschlagbar ist. Ein Festspannungsregler 114 des Relaismoduls 100 erzeugt nach Gleichrichtung der Wechselspannung oder eines Anteils der Wechselspannung eine Festspannung 116. Ein Komparator 120 des Relaismoduls 100 wird von der Festspannung 116 als Versorgungsspannung betrieben. Der Komparator 120 vergleicht eine von der Festspannung 116 abgeleitete Referenzspannung 118 mit einem gleichgerichteten und geglätteten Anteil der am Steuereingang 102 anliegenden Wechselspannung. Eine Schaltstufe 124 des Relaismoduls 100 betreibt abhängig vom Vergleich des Komparators 120 eine Relaiseinheit 126 des Relaismoduls 100. Die Relaiseinheit 126 ist eingangsseitig mit der Schaltstufe 124 und ausgangsseitig mit Schaltanschlüssen des Relaismoduls 100 verbunden.

Das erste Ausführungsbeispiel des Relaismoduls 100 umfasst den AC-Steuereingang 102, den Festspannungsregler 114, den Komparator 120, die Schaltstufe 124 und die Relaiseinheit 126. Die Relaiseinheit 126 kann auch kurz als Relais bezeichnet werden.

Die Relaiseinheit 126 kann ein mechanisches Relais umfassen. Die Schaltstufe 124 betreibt dazu nach Maßgabe des Komparators 120 einen Elektromagneten der Relaiseinheit 126. Der von der Schaltstufe 124 geschaltete Strom fließt in einer Erregerspule des Elektromagneten der Relaiseinheit 126 und erzeugt einen magnetischen Fluss durch einen ferromagnetischen Kern des Elektromagneten. In einer Variante des ersten Ausführungsbeispiels öffnet und/oder schließt ein beweglich gelagerter (beispielsweise ebenfalls ferromagnetischer) Anker in einer Schaltstellung die Schaltanschlüsse des Relaismoduls 100. Ohne den Strom in der Erregerspule kehrt der Anker durch eine Federkraft von der Schaltstellung in eine Ausgangslage zurück.

Während Spannungsschwellen und/oder der Stromschwellen des Stroms in der Erregerspule, beispielsweise aufgrund des ferromagnetischen Kerns, signifikant verschieden für Schalten und Abfallen des Ankers sein können, ist die Schaltstufe 124 dazu ausgebildet, nach Maßgabe des Komparators 120 die Relaiseinheit 126 entweder zum Schalten oder zum Abfallen des Ankers anzusteuern. Dadurch kann eine Hysterese oder Abweichung zwischen Schaltspannung und Abfallspannung am AC-Steuereingang 102 reduziert oder zumindest im Wesentlichen vermieden werden.

Vorzugsweise umfasst das erste Ausführungsbeispiel des Relaismoduls 100 ferner zwischen dem AC-Steuereingang 102 und dem Festspanungsregler 114 einen Gleichrichter 110 zur Gleichrichtung der am AC-Steuereingang 102 anliegenden Wechselspannung oder eines Anteils der anliegenden Wechselspannung. Die Gleichspannung 112 des Gleichrichters 110 (beispielsweise ein vom Gleichrichter 110 gleichgerichteter Anteil der Wechselspannung) speist den Festspannungsregler 114. Alternativ oder ergänzend schaltet die Schaltstufe 124 nach Maßgabe des Komparators 120 die vom Gleichrichter 110 erzeugte Gleichspannung 112 zum Betrieb der Relaiseinheit 126. Hierzu entspricht eine vom Komparator 120 an die Schaltstufe 124 ausgegebene Steuerspannung 122 dem Ergebnis des Vergleichs des Komparators 120.

Optional umfasst das erste Ausführungsbeispiel des Relaismoduls 100 ferner zwischen dem AC-Steuereingang 102 und dem Gleichrichter 110 einen kapazitiven Blindwiderstand 108. Der kapazitive Blindwiderstand 108 ist dazu ausgebildet, das Spannungsniveau der Wechselspannung an das Spannungsniveau des Gleichrichters 110 bzw. des Festspannungsreglers 114 anzupassen. Dazu fällt ein Großteil des Spannungsniveaus der Wechselspannung am kapazitiven Blindwiderstand 108 ab. Aufgrund einer dominierenden Blindleistung ist der Spannungsabfall am kapazitiven Blindwiderstand 108 im Wesentlichen ohne Verlustwärme.

Die geringe oder im Wesentlichen fehlende Verlustwärme verbessert die Energieeffizienz des Relaismoduls 100 und/oder ermöglicht eine kompakte Bauform, beispielsweise in einem schmalen Gehäuse und/oder einem Gehäuse ohne Lüftungsöffnungen. Eine geringe Breite des Gehäuses des Relaismoduls 100 ist besonders vorteilhaft bei einem Gehäuse zur Montage auf einer Tragschiene, beispielsweise auf einer Hutschiene. Beispielsweise sind durch die geringere Breite mehr Module auf derselben Tragschiene montierbar.

Eine der am AC-Steuereingang 102 anliegenden Wechselspannung entsprechende oder davon abgeleitete Eingangsspannung 106 liegt am Komparator 120 an. Aus der Eingangsspannung 106 erzeugt der Komparator den gleichgerichteten und geglätteten Anteil der am AC-Steuereingang 102 anliegenden Wechselspannung für den Vergleich mit der Referenzspannung 118.

Da die Referenzspannung 118 dem Festspannungsregler 114 unterliegt (d.h., aus der Festspannung 116 abgeleitet ist) und die Eingangsspannung 106 nicht dem Festspannungsregler 114 unterliegt (beispielsweise linear von der am AC-Steuereingang 102 anliegenden Wechselspannung ist), kann der Vergleich des Komparators 120 absolute Veränderungen der am AC-Steuereingang 102 anliegenden Wechselspannung erfassen.

Die Eingangsspannung 106 kann direkt am AC-Steuereingang 102 oder zwischen dem AC-Steuereingang 102 und dem kapazitiven Blindwiderstand 108 abgezweigt werden.

Optional umfasst das erste Ausführungsbeispiel des Relaismoduls 100 einen RC-Filter 104 zwischen dem AC-Steuereingang 102 und dem kapazitiven Blindwiderstand 108. Der RC-Filter kann Spannungsschwankungen herausfiltern, beispielsweise die zeitlich kürzer als ein anwendungsabhängiger Schaltrhythmus des Relaismoduls 100 sind, vorzugsweise auch wenn die Spannungsschwankungen die einheitliche Schaltschwelle des Relaismoduls über- oder unterschreitet.

Die Eingangsspannung 106 wird vorzugsweise nach dem RC-Filter 104 und vor dem Gleichrichter 110 abgezweigt, beispielsweise vor dem kapazitiven Blindwiderstand 108.

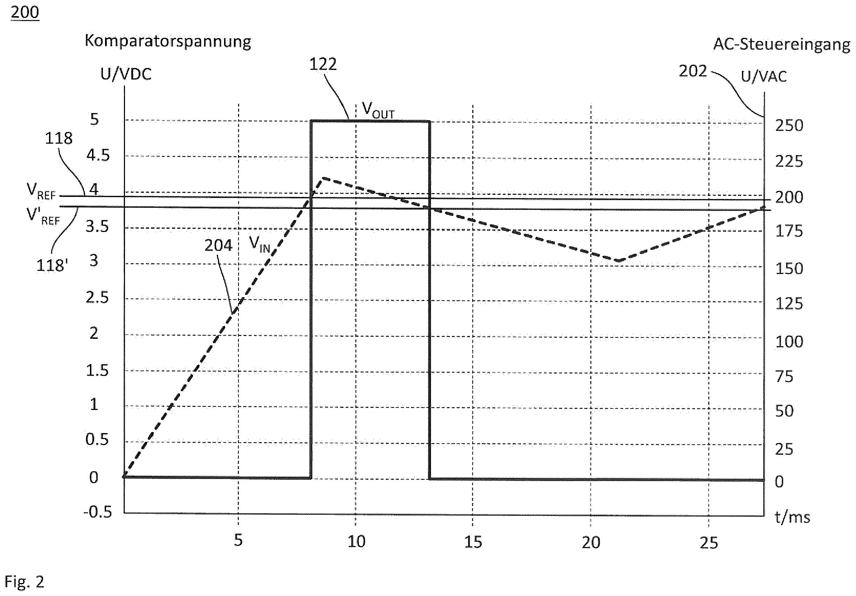

Fig. 2 zeigt ein beispielhaftes Diagramm eines Schaltverhaltens des Relaismoduls 100 gemäß einem zweiten Ausführungsbeispiel der Erfindung. Das zweite Ausführungsbeispiel kann mit einzelnen oder allen Merkmalen des unabhängigen Anspruchs und/oder des ersten Ausführungsbeispiels realisiert sein. Merkmale, die mit jenen des ersten Ausführungsbeispiels übereinstimmen oder austauschbar sind, sind im zweiten Ausführungsbeispiel mit gleichen Bezugszeichen beschrieben.

Das Diagramm 200 zeigt exemplarisch wie klein eine Hysterese aufgrund des zweiten Ausführungsbeispiels des Relaismoduls 100, beispielsweise aufgrund des Festspannungsreglers 114 in Verbindung mit dem Komparator 120 zur Steuerung der Schaltstufe 124 (auch als Komparator-Schaltung bezeichnet) sein kann. Hierbei bezieht sich die Hysterese auf die Differenz zwischen der Schaltspannung und der Abfallspannung (d.h., der Spannungsschwelle zum Schalten bzw. Abfallen der Relaiseinheit 126) am AC-Steuereingang 102. Die Hysterese ist klein in dem Sinn, dass die Differenz klein ist im Vergleich zur Schaltspannung, beispielsweise kleiner als 10% oder kleiner als 1%.

Das Diagramm 200 zeigt einen zeitlichen Verlauf (mit der Zeitskala auf der horizontalen Achse). Vertikal sind Spannungen abgetragen. Auf der rechten vertikalen Achse ist die Wechselspannung am AC-Steuereingang 102 abgetragen. Ein- und Ausgangsgleichspannungen für den Vergleich im Komparator 120 sind auf der linken vertikalen Achse abgetragen und im Diagramm 200 als V_{IN} und V_{OUT} bezeichnet.

Die Eingangsgleichspannung V_{IN} ist ein Beispiel für den gleichgerichteten und geglätteten Anteil 204 der Wechselspannung 202 beim Vergleich mit der Referenzspannung 118 im Komparator 120. Beispielsweise hängt die Eingangsgleichspannung 204 linear von der am AC-Steuereingang 102 anliegenden Wechselspannung 202 ab, so dass die linke Skala im Diagramm 200 für die Eingangsgleichspannung 204 für den Vergleich im Komparator 120 korrespondiert mit einem entsprechenden Wert der Wechselspannung 202 am AC-Steuereingang 102 auf der rechten Skala im Diagramm 200.

Der Komparator 120 vergleicht die Eingangsgleichspannung 204 mit der Referenzspannung 118. Das Resultat ist die Ausgangsgleichspannung (V_{OUT}), die ein Beispiel für die Steuerspannung 122 ist. Die Steuerspannung 122 ist ein Logikpegel, der eindeutig das Schalten (d.h., einen Zustand des Betriebs) der Relaiseinheit 126 und das Abfallen (d.h., einen stromlosen Zustand) der Relaiseinheit 126 festlegt.

Die Differenz zwischen der Referenzspannung 118 zum Schalten (d.h., der Referenzspannung ausgehend vom stromlosen Zustand) und der Referenzspannung 118' zum Abfallen (d.h., der Referenzspannung ausgehend vom Zustand des Betriebs) ist klein im Vergleich zur Referenzspannung 118. Beispielsweise ist die Differenz 0,2 V bei 3,9 V Referenzspannung 118 oder 5% der Referenzspannung 118. Aufgrund des linearen Zusammenhangs zwischen der Wechselspannung 202 und dem gleichgerichteten und geglätteten Anteil 204 der Wechselspannung 202 ist die Hysterese am AC-Steuereingang 102 ebenfalls nur 5%.

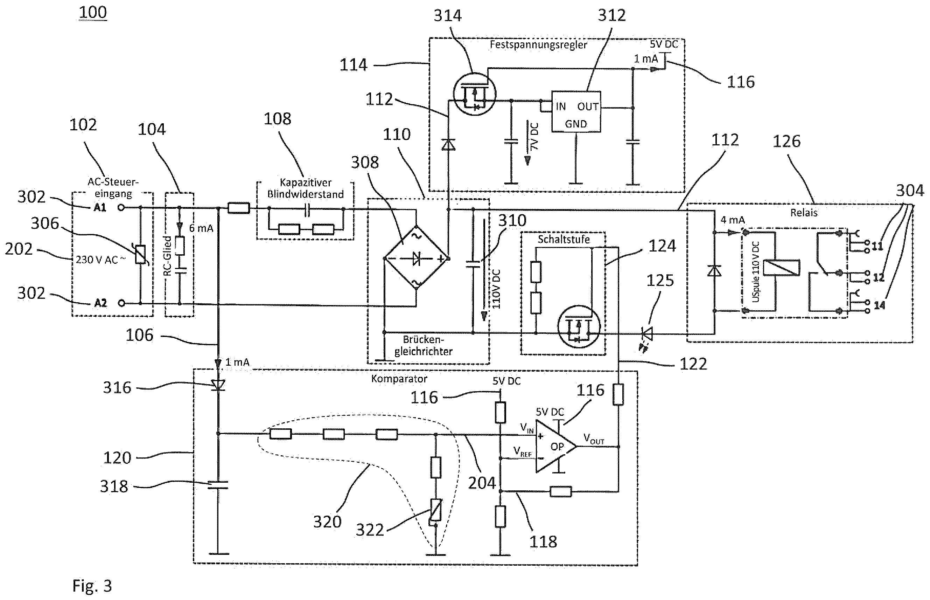

Fig. 3 zeigt ein schematisches Schaltbild des Relaismoduls 100 gemäß einem dritten Ausführungsbeispiel der Erfindung. Das dritte Ausführungsbeispiel kann mit einzelnen oder allen Merkmalen des unabhängigen Anspruchs, des ersten und/oder des zweiten Ausführungsbeispiels realisiert sein. Merkmale, die mit jenen des ersten oder zweiten Ausführungsbeispiels übereinstimmen oder austauschbar sind, sind im dritten Ausführungsbeispiel mit gleichen Bezugszeichen beschrieben.

Zur wahlweisen Ansteuerung des Relaismoduls 100 liegt an einem AC-Steuereingang 102 eine Wechselspannung 202 (beispielsweise 230 V AC) als Steuerspannung 202 an den Anschlüssen 302 des Steuereingangs (mit Kontakten A1 und A2) an. Ein den Anschlüssen 302 parallelgeschalteter Varistor 306 im AC-Steuereingang 102 dient als Überspannungsschutz. Zur Spannungsreduzierung dient ein kapazitiver Blindwiderstand 108.

Die reduzierte Wechselspannung, d.h. der nach dem kapazitiven Blindwiderstand 108 anliegende Anteil der Wechselspannung 202, wird von einem Gleichrichter 110 gleichgerichtet. Der Gleichrichter 110 umfasst einen Brückengleichrichter 308 mit einem Glättungskondensator 310.

Ein Festspannungsregler 114 umfasst einen Spannungsregler 312 (beispielsweise ein Low-Drop-Spannungsregler), dem ein normal-leitender (d.h., selbstleitender) Feldeffekttransistor 314 (beispielsweise ein Depletion-Mode MOSFET) vorgeschaltet ist. Der Spannungsregler 312 erzeugt eine Festspannung 116, die als Versorgungsspannung und zudem anteilig als Referenzspannung 118 für einen Komparator 120 dient. Der Komparator 120 kann auch als Regelstufe bezeichnet werden.

Der hohe Eingangsspannungsbereich (beispielsweise von 110 V DC) wird über den selbstleitenden MOSFET 314 in Verbindung mit dem Low-Drop-Spannungsregler 312 erreicht. Da der benötigte Strom (beispielsweise 1 mA) für den Komparator 120 und die Ansteuerung der Schaltstufe 124 sehr gering ist, entstehen dort nur sehr geringe Leistungsverluste.

Der Komparator 120 vergleicht die Referenzspannung 118 mit einem gleichgerichteten und geglätteten Anteil 204 der Wechselspannung (d.h. der Eingangsgleichspannung), welche aus der Eingangsspannung 106 (beispielsweise vor oder nach einem RC-Filter 104) ermittelt wird. Die Eingangsspannung 106 wird mittels eines Einweggleichrichters 316 gleichgerichtet und einem weiteren Glättungskondensator 318 geglättet. Der gleichgerichtete und geglättete Anteil 204 der Wechselspannung 202 ist über einen Spannungsteiler 320 einstellbar. Da der gleichgerichtete und geglättete Anteil 204 die Eingangsgleichspannung für den Vergleich mit der Referenzspannung 118 ist, ist mittels des einstellbaren Spannungsteilers 320 der (im Wesentlichen einheitliche) Schwellwert (auch: Schaltschwelle) der Wechselspannung 202 zum Schalten und Abfallen der Relaiseinheit 126 einstellbar.

Beim Überschreiten der Referenzspannung 118 schaltet der Komparator 120 die Schaltstufe 124 und betreibt somit die Relaiseinheit 126. Die Schaltschwelle kann (beispielsweise je nach Vorgabe) durch eine Änderung des Spannungsteilers 320 (z.B. durch Einstellen eines Potentiometers 322) bestimmt sein.

Damit ist gewährleistet, dass das Relais eine fest definierte (d.h., im Wesentlichen einheitliche) Ein- und Ausschaltschwelle besitzt. Ferner leuchtet eine Zustandsanzeige 125 (z.B. eine Leuchtdiode, LED) nur bei geschalteter Relaiseinheit 126.

Das unerwünschte Schalten des Relais, ein verspätetes Abfallen des Relais und/oder eine fehlerhafte Anzeige des Zustands werden somit unterbunden. Ferner ist eine zusätzliche (insbesondere separate, ununterbrochene) Versorgungsspannung für das Relaismodul 100 nicht erforderlich.

Die im Schaltbild der Fig. 3 eingezeichneten Spannungen und Ströme sind beispielhaft. Beispielsweise kann bei 230V AC Wechselspannung 202 am AC-Steuereingang 102 eine entsprechende Eingangsspannung 106 anliegen. Die Stromverteilung kann sich wie folgt zusammensetzen. Im RC-Glied 104 fließen ca. 6 mA. In der Erregerspule (d.h., der Relaisspule) fließen im geschalteten Zustand ca. 4 mA. Die weiteren Schaltungsteile benötigen ca. 2 mA. Somit ist die Stromaufnahme gering.

Durch den Blindwiderstand 108 und die geringe Stromaufnahme der anderen Schaltungsteile (insbesondere des Komparators 120) ist die Verlustleistung somit sehr gering.

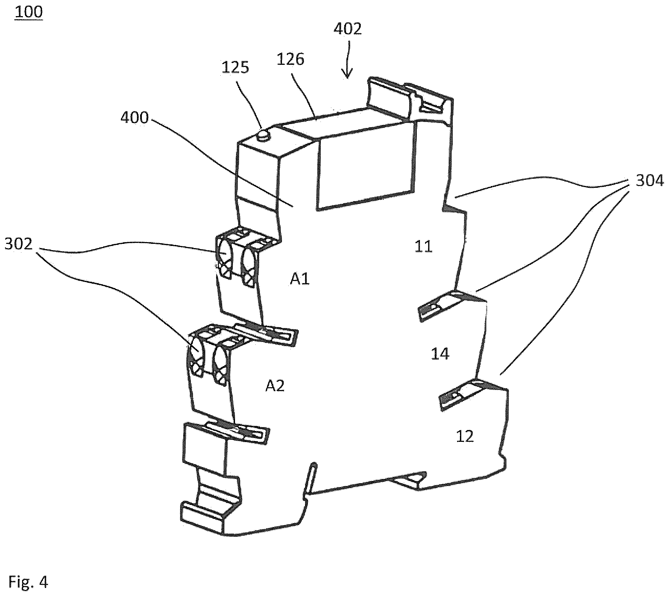

Fig. 4 zeigt eine beispielhafte perspektivische Darstellung eines Relaismoduls gemäß einem vierten Ausführungsbeispiel der Erfindung. Das vierte Ausführungsbeispiel kann mit einzelnen oder allen Merkmalen des unabhängigen Anspruchs, des ersten, zweiten und/oder dritten Ausführungsbeispiels realisiert sein. Merkmale, die mit jenen eines anderen Ausführungsbeispiels übereinstimmen oder austauschbar sind, sind im vierten Ausführungsbeispiel mit gleichen Bezugszeichen beschrieben.

Durch den kapazitiven Blindwiderstand 108 im Eingang und der geringen Stromaufnahme des Komparators 120 entstehen nur sehr geringe Leistungsverluste in einem geschlossenen Gehäuse 400. Das Gehäuse 400 kann beispielsweise ein Relaismodul (beispielsweise gemäß Fig.4), vorzugsweise mit 14 mm Breite, sein.

Das vierte Ausführungsbeispiel kann somit den vorhandenen physikalischen Gegebenheiten, insbesondere im Relaismodul, entsprechen ohne eine zusätzliche externe Versorgungsspannung (d.h. ohne zusätzliche Klemmstellen, etc.). Jedes der Ausführungsbeispiele kann ein kostengünstiges, verbrauchsleistungsarmes und platzsparendes Relaismodul 100 mit einheitlicher (d.h., hysteresearmer) und/oder einstellbarer Schaltschwelle realisieren.

Alternativ oder ergänzend kann das Gehäuse 400 einen Steckplatz 402 zur austauschbaren Aufnahme der Relaiseinheit 126 aufweisen. Die Relaiseinheit 126 kann im eingesetzten Zustand bündig mit dem Gehäuse abschließen. Ein vorgespannter und längsbeweglicher Schieber kann die Relaiseinheit 126 im Steckplatz 402 sichern.

### Bezugszeichenliste

| | |
|---|---|
| Relaismodul | 100 |
| Steuereingang | 102 |
| RC-Filter | 104 |
| Eingangsspannung | 106 |
| Kapazitiver Blindwiderstand | 108 |
| Gleichrichter | 110 |
| Gleichspannung | 112 |
| Festspannungsregler | 114 |
| Festspannung | 116 |
| Referenzspannung | 118 |
| Komparator | 120 |
| Steuerspannung | 122 |
| Schaltstufe | 124 |
| Zustandsanzeige | 125 |
| Relaiseinheit | 126 |
| Diagramm | 200 |
| Wechselspannung am Steuereingang | 202 |
| Gleichgerichteter und geglätteter Anteil der Wechselspannung | 204 |
| Anschlüsse des Steuereingangs | 302 |
| Schaltanschlüsse | 304 |
| Varistor | 306 |
| Brückengleichrichter | 308 |
| Glättungskondensator | 310 |
| Spannungsregler | 312 |
| Selbstleitender Feldeffekttransistor | 314 |
| Einweggleichrichter | 316 |
| Weiterer Glättungskondensator | 318 |
| Spannungsteilers | 320 |
| Potentiometer | 322 |
| Gehäuse | 400 |
| Steckplatz | 402 |

## Patentansprüche

1. Relaismodul (100), umfassend:
- einen Steuereingang (102), der zur kombinierten Ansteuerung und Leistungsversorgung des Relaismoduls (100) mit Wechselspannung (202) beaufschlagt oder beaufschlagbar ist;
- einen Festspannungsregler (114), der dazu ausgebildet ist, nach Gleichrichtung der Wechselspannung (202) oder eines Anteils der Wechselspannung (202) eine Festspannung (116) zu erzeugen;
- einen Komparator (120), der dazu ausgebildet ist, von der Festspannung (116) betrieben zu werden und eine von der Festspannung (116) abgeleitete Referenzspannung (118) mit einem gleichgerichteten und geglätteten Anteil (204) der Wechselspannung (202) zu vergleichen;
- eine Schaltstufe (124), die dazu ausgebildet ist, abhängig vom Vergleich des Komparators (120) eine Relaiseinheit (126) zu betreiben; und
- eine Relaiseinheit (126), die eingangsseitig mit der Schaltstufe (124) und ausgangsseitig mit Schaltanschlüssen (304) des Relaismoduls (100) verbunden ist.

2. Relaismodul (100) nach Anspruch 1, wobei die abgeleitete Referenzspannung (118) ein fester Anteil der Festspannung (116) ist.

3. Relaismodul (100) nach Anspruch 1 oder 2, ferner umfassend:
einen dem Festspannungsregler (114) vorgeschalteten Gleichrichter (110) mit einem Brückengleichrichter (308) zur Gleichrichtung der Wechselspannung (202) oder eines Anteils der Wechselspannung (202).

4. Relaismodul (100) nach Anspruch 3, wobei die Schaltstufe (124) einen vom Gleichrichter (110) gespeisten Spulenstromkreis der Relaiseinheit (126) schaltet.

5. Relaismodul (100) nach Anspruch 4, wobei im Spulenstromkreis eine Zustandsanzeige (125) in Reihe zur Relaiseinheit (126) geschaltet ist.

6. Relaismodul (100) nach einem der Ansprüche 3 bis 5, wobei zwischen dem Steuereingang (102) und dem Gleichrichter (110) ein kapazitiver Blindwiderstand (108) angeordnet ist, der den Anteil der Wechselspannung (202) zur Gleichrichtung erzeugt.

7. Relaismodul (100) nach Anspruch 6, wobei am kapazitiven Blindwiderstand (108) ein Großteil, vorzugsweise mehr als die Hälfte oder mehr als 75%, der Wechselspannung (202) abfällt.

8. Relaismodul (100) nach einem der Ansprüche 3 bis 7, wobei der Komparator (120) dazu ausgebildet ist, den gleichgerichteten und geglätteten Anteil (204) der Wechselspannung (202) für den Vergleich mit der Referenzspannung unabhängig vom dem Festspannungsregler (114) vorgeschalteten Gleichrichter (110) zu erzeugen.

9. Relaismodul (100) nach einem der Ansprüche 1 bis 8, wobei der Komparator (120) einen Einweggleichrichter (316) mit einem Glättungskondensator (318) umfasst, an dem die Wechselspannung (202) oder ein Anteil der Wechselspannung (202) als Eingangsspannung (106) anliegt und der dazu ausgebildet ist, eine geglättete Gleichspannung zu erzeugen für den gleichgerichteten und geglätteten Anteil (204) der Wechselspannung (202) im Komparator (120).

10. Relaismodul (100) nach Anspruch 9, wobei der Komparator (120) ferner einen Spannungsteiler (320) umfasst, an dem die geglättete Gleichspannung des Einweggleichrichters (316) anliegt und der dazu ausgebildet ist, einen Anteil der geglätteten Gleichspannung zu erzeugen als den gleichgerichteten und geglätteten Anteil (204) der Wechselspannung (202) im Komparator (120).

11. Relaismodul (100) nach Anspruch 10, wobei der Spannungsteiler (320) mittels eines Potentiometers (322) steuerbar ist.

12. Relaismodul (100) nach einem der Ansprüche 9 bis 11 und einem der Ansprüche 3 bis 8, wobei die Eingangsspannung (106) des Komparators (120) zwischen dem Steuereingang (102) und dem dem Festspannungsregler (114) vorgeschalteten Gleichrichter (110), vorzugsweise vor dem kapazitiven Blindwiderstand (108), abgegriffen ist.

13. Relaismodul (100) nach einem der Ansprüche 1 bis 12, wobei das Relaismodul (100) in einem geschlossenen Gehäuse (400) angeordnet ist.

14. Relaismodul (100) nach Anspruch 13, wobei am Gehäuse (400) von außen zugängliche Klemmen der Schaltanschlüsse (304) angeordnet sind, und das Gehäuse (400) zur Befestigung auf einer Tragschiene, insbesondere einer Hutschiene, ausgebildet ist.

15. Relaismodul (100) nach Anspruch 13 oder 14, wobei das Gehäuse (400) einen von außen zugänglichen Steckplatz (402) zur austauschbaren mechanischen und elektrischen Verbindung der Relaiseinheit (126) am Relaismodul (100) aufweist.

## Claims

1. A relay module (100), comprising:
- a control input (102) to which an alternating voltage (202) is applied, or which is configured for said application, for the combined control and power supply of the relay module (100);
- a fixed voltage regulator (114) which is configured to generate a fixed voltage (116) after rectification of the alternating voltage (202) or a portion of the alternating voltage (202);
- a comparator (120) which is configured to be operated by the fixed voltage (116) and to compare a reference voltage (118) derived from the fixed voltage (116) with a rectified and smoothed portion (204) of the alternating voltage (202);
- a switching stage (124) which is configured to operate a relay unit (126) depending on the comparison of the comparator (120); and
- a relay unit (126) which is connected on the input side to the switching stage (124) and on the output side to switching connections (304) of the relay module (100).

2. The relay module (100) according to claim 1, wherein the derived reference voltage (118) is a fixed portion of the fixed voltage (116).

3. The relay module (100) according to claim 1 or 2, further comprising:
- a rectifier (110) connected upstream of the fixed voltage regulator (114) with a bridge rectifier (308) for rectifying the alternating voltage (202) or a portion of the alternating voltage (202).

4. The relay module (100) according to claim 3, wherein the switching stage (124) switches a coil circuit of the relay unit (126) fed by the rectifier (110).

5. The relay module (100) according to claim 4, wherein a status indicator (125) is connected in series with the relay unit (126) in the coil circuit.

6. The relay module (100) according to one of claims 3 to 5, wherein a capacitive reactance (108) is arranged between the control input (102) and the rectifier (110), which generates the portion of the alternating voltage (202) for rectification.

7. The relay module (100) according to claim 6, wherein a large part, preferably more than half or more than 75%, of the alternating voltage (202) drops at the capacitive reactance (108).

8. The relay module (100) according to one of claims 3 to 7, wherein the comparator (120) is configured to generate the rectified and smoothed portion (204) of the alternating voltage (202) for comparison with the reference voltage independently of the rectifier (110) connected upstream of the fixed voltage regulator (114).

9. The relay module (100) according to one of claims 1 to 8, wherein the comparator (120) comprises a half-wave rectifier (316) with a smoothing capacitor (318), to which the alternating voltage (202) or a portion of the alternating voltage (202) is applied as an input voltage (106) and which is configured to generate a smoothed direct voltage for the rectified and smoothed portion (204) of the alternating voltage (202) in the comparator (120).

10. The relay module (100) according to claim 9, wherein the comparator (120) further comprises a voltage divider (320) to which the smoothed DC voltage of the half-wave rectifier (316) is applied and which is configured to generate a portion of the smoothed DC voltage as the rectified and smoothed portion (204) of the alternating voltage (202) in the comparator (120).

11. The relay module (100) according to claim 10, wherein the voltage divider (320) is controllable by means of a potentiometer (322).

12. The relay module (100) according to one of claims 9 to 11 and one of claims 3 to 8, wherein the input voltage (106) of the comparator (120) is tapped between the control input (102) and the rectifier (110) connected upstream of the fixed voltage regulator (114), preferably upstream of the capacitive reactance (108).

13. The relay module (100) according to one of claims 1 to 12, wherein the relay module (100) is arranged in a closed housing (400).

14. The relay module (100) according to claim 13, wherein terminals of the switching connections (304) that are accessible from the outside are arranged on the housing (400), and the housing (400) is designed for fastening to a support rail, in particular a top hat rail.

15. The relay module (100) according to claim 13 or 14, wherein the housing (400) has an externally accessible slot (402) for the exchangeable mechanical and electrical connection of the relay unit (126) to the relay module (100).

## Revendications

1. Module relais (100), comprenant :
- une entrée de commande (102), qui est alimentée ou peut être alimentée en tension alternative (202) pour la commande et l'alimentation combinées du module relais (100);
- un régulateur de tension fixe (114), qui est conçu pour générer une tension fixe (116) après redressement de la tension alternative (202) ou d'une partie de la tension alternative (202);
- un comparateur (120) qui est conçu pour fonctionner avec la tension fixe (116) et pour comparer une tension de référence (118) dérivée de la tension fixe (116) avec une composante redressée et lissée (204) de la tension alternative (202);
- un étage de commutation (124) qui est conçu pour faire fonctionner une unité de relais (126) en fonction de la comparaison du comparateur (120); et
- une unité de relais (126), qui est connectée côté entrée à l'étage de commutation (124) et côté sortie aux connexions de commutation (304) du module relais (100).

2. Module relais (100) selon la revendication 1, dans lequel la tension de référence dérivée (118) est une partie fixe de la tension fixe (116).

3. Module relais (100) selon la revendication 1 ou 2, comprenant en outre:
un redresseur (110) connecté en amont du régulateur de tension fixe (114) à un pont redresseur (308) pour redresser la tension alternative (202) ou une partie de la tension alternative (202).

4. Module relais (100) selon la revendication 3, dans lequel l'étage de commutation (124) commute un circuit de bobine de l'unité relais (126) alimenté par le redresseur (110).

5. Module relais (100) selon la revendication 4, dans lequel un affichage d'état (125) est connecté en série avec l'unité relais (126) dans le circuit de bobine.

6. Module relais (100) selon l'une des revendications 3 à 5, dans lequel une réactance capacitive (108) est disposée entre l'entrée de commande (102) et le redresseur (110), qui génère la proportion de la tension alternative (202) pour rectification.

7. Module relais (100) selon la revendication 6, dans lequel une grande partie, de préférence plus de la moitié ou plus de 75%, de la tension alternative (202) chute aux bornes de la réactance capacitive (108).

8. Module relais (100) selon l'une des revendications 3 à 7, dans lequel le comparateur (120) est conçu pour utiliser la partie redressée et lissée (204) de la tension alternative (202) pour comparaison avec la tension de référence indépendamment de la régulateur de tension fixe (114) pour générer un redresseur en amont (110).

9. Module relais (100) selon l'une des revendications 1 à 8, dans lequel le comparateur (120) comprend un redresseur demi-onde (316) avec un condensateur de lissage (318) sur lequel la tension alternative (202) ou une partie de la tension alternative (202) est présente comme tension d'entrée (106) et est conçue pour générer une tension continue lissée pour la partie redressée et lissée (204) de la tension alternative (202) dans le comparateur (120).

10. Module relais (100) selon la revendication 9, dans lequel le comparateur (120) comprend en outre un diviseur de tension (320) auquel est appliquée la tension continue lissée du redresseur demi-onde (316) et qui est conçu pour générer un proportion de la tension continue lissée que la partie redressée et lissée (204) de la tension alternative (202) dans le comparateur (120).

11. Module relais (100) selon la revendication 10, dans lequel le diviseur de tension (320) peut être commandé au moyen d'un potentiomètre (322).

12. Module relais (100) selon l'une des revendications 9 à 11 et l'une des revendications 3 à 8, dans lequel la tension d'entrée (106) du comparateur (120) entre l'entrée de commande (102) et le redresseur (110) connecté en amont du régulateur de tension fixe (114), de préférence devant la réactance capacitive (108), est prélevée.

13. Module relais (100) selon l'une des revendications 1 à 12, dans lequel le module relais (100) est disposé dans un boîtier fermé (400).

14. Module relais (100) selon la revendication 13, dans lequel des bornes accessibles de l'extérieur des connexions de commutation (304) sont disposées sur le boîtier (400), et le boîtier (400) est conçu pour être fixé à un rail de montage, en particulier un rail chapeau.

15. Module relais (100) selon la revendication 13 ou 14, dans lequel le boîtier (400) présente une fente accessible de l'extérieur (402) pour la connexion mécanique et électrique interchangeable de l'unité relais (126) au module relais (100).
